## Europäisches Patentamt
## European Patent Office
## Office européen des brevets

(19)

(11) Veröffentlichungsnummer: **0 171 461**
**B1**

(12) **EUROPÄISCHE PATENTSCHRIFT**

(45) Veröffentlichungstag der Patentschrift:
17.01.90

(21) Anmeldenummer: **84112881.2**

(22) Anmeldetag: **25.10.84**

(51) Int. Cl.⁴: **G 02 C 5/12**

(54) Brille.

(30) Priorität: **07.08.84 DE 3429089**

(43) Veröffentlichungstag der Anmeldung:
**19.02.86 Patentblatt 86/08**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**DE-A-2 511 462**
**DE-A-2 558 122**
**DE-A-2 616 432**
**DE-A-2 835 116**
**DE-U-7 428 158**
**GB-A-869 874**

(73) Patentinhaber: **EYEMETRICS-SYSTEMS AG**
**Steinbockstrasse 4**
**CH-7001 Chur (CH)**

(72) Erfinder: **EYEMETRICS-SYSTEMS AG**
**Steinbockstrasse 4**
**CH-7001 Chur (CH)**

(74) Vertreter: **Grams, Klaus Dieter, Dipl.-Ing.**
**Patentanwaltsbüro Tiedtke-Bühling-Kinne- Grupe-Pellmann-Grams-Strulf Winter-Roth Bavariaring 4**
**D-8000 München 2 (DE)**

## Beschreibung

Die Erfindung bezieht sich auf eine Brille gemäß Oberbegriff von Patentanspruch 1.

Aufgrund der äußerst unterschiedlichen Gesichtsform der einzelnen Menschen ist eine Brille wünschenswert, die eine Anpassung an die individuelle Gesichtsform ermöglicht und somit ein bequemes Tragen ohne ständiges Verrutschen gewährleistet. Hierfür ist insbesondere der Nasenbereich der Brillenfassung maßgebend, der die auf der Nase aufliegenden Seitenstege oder einen entsprechenden Sattelsteg umfaßt, wobei die Stege beispielsweise mit der Brillenfassung einstückig sind oder durch an der Brillenfassung fest angebrachte Stegstützen gehalten sind. Insbesondere beim erstgenannten Fall ist keine Anpassung an die individuelle Nasenform möglich, so daß schlechter und drückender Sitz der Brille auf der Nase zwangsläufig die Folge ist.

Aus der DE-OS-2 732 860 ist eine Befestigungsvorrichtung für einen Seitensteg an einer Seitenstegstütze bekannt; hierbei ist an dem Seitensteg ein Befestigungsabschnitt einstückig angeformt, in dem eine Sacklochbohrung mit Hinterschnitt ausgebildet ist. Der Befestigungsabschnitt ist aus Kunststoff gefertigt und hat eine ausreichende Elastizität, die ein Eindrücken einer Kugel, die am freien Ende einer Seitenstegstütze angebracht ist, in die Sacklochbohrung ermöglicht. Hierdurch ist aufgrund der Reibkraft eine relativ feste Verbindung zwischen dem Seitensteg und der Seitenstegstütze erstellt, die nur in geringem Maße eine Ausrichtbeweglichkeit des Seitenstegs relativ zu seiner Seitenstegstütze zuläßt, so daß auch hiermit eine geeignete Anpassung der Brille an eine individuelle Nasenform nicht möglich ist.

Bessere Möglichkeiten zur Ausrichtung der Seitenstege bzw. des Sattelsteges an der Brille sind bei einer durch die GB-A-869 874 bekannten Brille gegeben, von der im Oberbegriff von Patentanspruch 1 ausgegangen ist. Bei dieser bekannten Brille wirken zur Bildung jeder der beiden Kugelpfannen zwei Bauteile zusammen, die jeweils mit einer ungefähr halbkugelförmigen Ausnehmung versehen sind, wobei diese Ausnehmungen einander zugewandt sind. Die beiden Bauteile sind mit Hilfe von Befestigungsmitteln in Form zumindest einer Schraube miteinander verbunden und gegeneinander spannbar. Im bekannten Fall bilden die beiden Bauteile eine separate Vorrichtung, die an der Brücke der Brille befestigt werden kann, oder ist eines der Bauteile die Brücke selber, an der das andere Bauteil mittels der Schraube befestigt ist. Jede der beiden Kugelpfannen ist nach unten offen, so daß die Stegstütze nach unten aus der Kugelpfanne herausragt. Vorteilhaft bei der bekannten Brille ist, daß die Möglichkeit besteht, die von den beiden Stegstützen getragenen Seitenstege in eine für den jeweiligen Brillenträger angemessene Position zu bringen. Zu diesem Zweck wird jede der beiden Stegstützen durch Bewegen der Kugel in der Kugelpfanne ausgerichtet, wonach die Kugel in der Kugelpfanne durch Anziehen der Schraube festgeklemmt wird. Nachteilig an der bekannten Brille ist, daß sowohl der konstruktive Aufwand für diese individuelle Einstellmöglichkeit als auch der erforderliche Arbeitsaufwand beim Einstellen verhältnismäßig hoch sind, so daß sich die Ausbildung dieser bekannten Brille zwar für die Sonderfälle, für die sie bestimmt ist, nämlich als Hilfsmittel der plastischen Nasenchirurgie, eignen mag, nicht jedoch für übliche, in großen Stückzahlen gefertigte Korrektionsbrillen.

Der Erfindung liegt die Aufgabe zugrunde, eine Brille zu schaffen, die äußerst genau an eine individuelle Nasenform anpaßbar ist.

Diese Aufgabe wird erfindungsgemäß durch die Merkmale im kennzeichnenden Teil des Hauptanspruchs gelöst.

Da die Kugel und die Kugelpfanne eine Art Kugellager bilden, ist zur Einstellung eine dreidimensionale Bewegungsmöglichkeit gegeben, die aufgrund ihrer Uneingeschränktheit eine besonders gute Anpassung an die jeweilige individuelle Nasen- bzw. Gesichtsform gestattet. Da diese Einstellbewegung zwischen der übrigen Brille und der Stegstütze vorgenommen werden kann, wird aufgrund des durch die Stegstütze gebildeten Hebelarms bezüglich des Stegs ein großer Einstellbereich für diesen erreicht. Darüberhinaus sind die beiden Stegstützen und somit ihre daran angebrachten Stege unabhängig voneinander einstellbar, so daß hierdurch eine sehr gute beidseitige Anpassung auch an unsymmetrische Nasen erfolgen kann.

Die Fertigung der Brücke im Bereich der Ausnehmung aus Kunststoff gestattet eine einfache Herstellung der Verbindung, da aufgrund der Elastizität des Kunststoffs leicht die Kugel eingedrückt werden kann.

Gemäß Anspruch 4 sind an den ineinandergreifenden Bauelementen, nämlich der Kugel und der Kugelpfanne, Rastelemente ausgebildet, so daß eine gerastete Relativbewegung zwischen diesen Bauteilen gegeben ist, die, bis die Fixierung erfolgt ist, eine unbeabsichtigte Lageverstellung der Teile zueinander verhindert.

Ausführungsbeispiele der Erfindung werden nachstehend anhand schematischer Zeichnungen ausführlich beschrieben.

Es zeigen:

Fig. 1    eine Brücke in Frontansicht,
Fig. 1a   einen Teilschnitt der Brücke gemäß Fig. 1 entlang Linie I - I,
Fig. 2    eine Frontansicht einer weiteren Ausführungsform einer Brücke,
Fig. 2a   einen Teilschnitt der Brücke gemäß Fig. 2 entlang Linie II - II,
Fig. 3    eine Seitenstegstütze, an der ein Seitensteg mittels eines Kugelgelenks gelagert ist,
Fig. 4    eine Ansicht der Seitenstegstütze gemäß Fig. 3 in Richtung des Pfeils VI, und
Fig. 5    und 6 weitere Ausführungsformen von Seitenstegstützen.

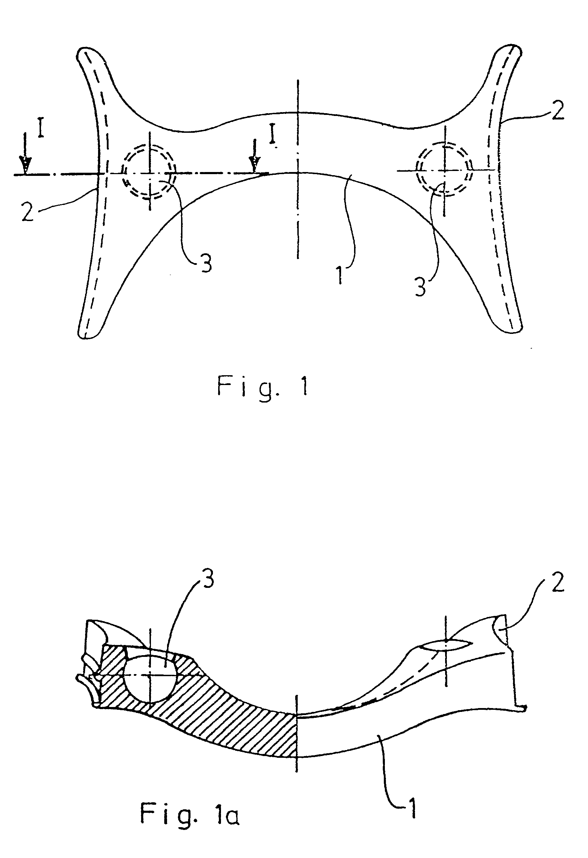

Fig. 1 zeigt in Frontansicht eine Brücke 1 mit Seitenflächen 2, an denen ein Brillenglas (nicht gezeigt) befestigt wird und die entsprechend der Randkrümmung des Brillenglases gebogen sind. Diese Randflächen sind durch einen sich zur Mitte der Brücke verjüngenden Abschnitt verbunden, der im Bereich der Randflächen dreiecksähnliche Form hat. Die Brücke 1 hat in der Rückseite, d.h. der den Augen eines Gesichts zugewandten Seite, des dreiecksähnlichen Abschnitts zwei teilkugelförmige Ausnehmungen 3 (Fig. 1a). Diese Ausnehmungen bilden die Kugelpfanne eines Kugelgelenks und nehmen jeweils an einer Stegstütze, die nachstehend näher erläutert wird, ausgebildete Kugel auf. Zu diesem Zweck ist die Brücke aus Kunststoff gefertigt, der eine ausreichende Elastizität besitzt, um die Kugel eindrücken zu können. Durch dieses Kugelgelenk ist somit eine dreidimensionale Bewegungsmöglichkeit für die Stegstütze gegeben, so daß diese entsprechend einer individuellen Nasenform justierbar ist. Die Kugelpfanne kann auch zweiseitig offen sein und somit nur einen Teilbereich einer Kugelfläche umfassen, der einen Ring bildet.

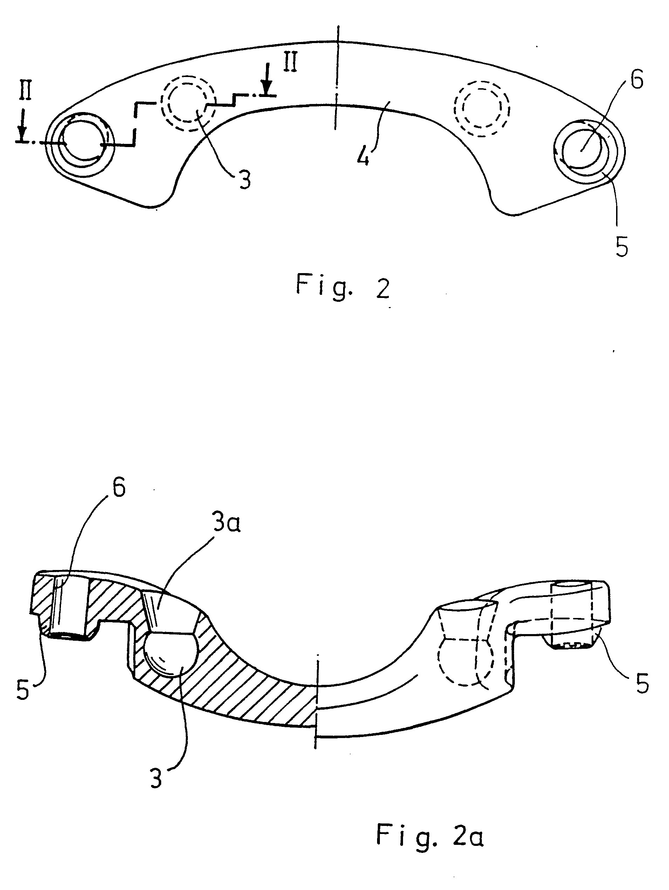

Die Fig. 2 und 2a zeigen eine weitere Ausführungsform einer Brücke 4 mit anderer Form, an der das Brillenglas durch Schrauben befestigt ist. Die Brücke 4 weist hierzu Vorsprünge 5 auf, die von einer Durchgangsbohrung 6 durch die Brücke durchsetzt sind. Diese Vorsprünge 5 haben eine teilkugelförmige Kontur und kommen beim Anbau des Brillenglases (nicht gezeigt) an der Brücke in entsprechend geformten Ausnehmungen auf der Rückseite, d.h. der dem Auge zugewandten Seite des Brillenglases zu liegen. Durch die Ausnehmungen im Brillenglas geht ebenfalls eine mit der Durchgangsbohrung 6 in der Brücke fluchtende Bohrung, wobei die Bohrungen von der Schraube durchsetzt sind. Die Anbaubereiche für das Brillenglas sind durch einen bogenförmigen Abschnitt verbunden, in dem ebenfalls zur Aufnahme einer Stegstütze Kugelpfannen 3 ausgebildet sind. Diese Kugelpfannen sind jedoch tiefer in der Brücke ausgebildet und haben einen deutlich verlängerte konische Übergangsöffnung 3a die einen Einführungsbereich für die an der Stegstütze angeformte Kugel bildet, wodurch erreicht ist, daß diese bei extremen Verstellwinkeln nicht so leicht außer Eingriff mit der Kugelpfanne kommt. Ferner kann durch die Abmessungen der konusartigen Übergangsöffnung 3a der Einstellbereich der Seitenstegstütze festgelegt und begrenzt werden.

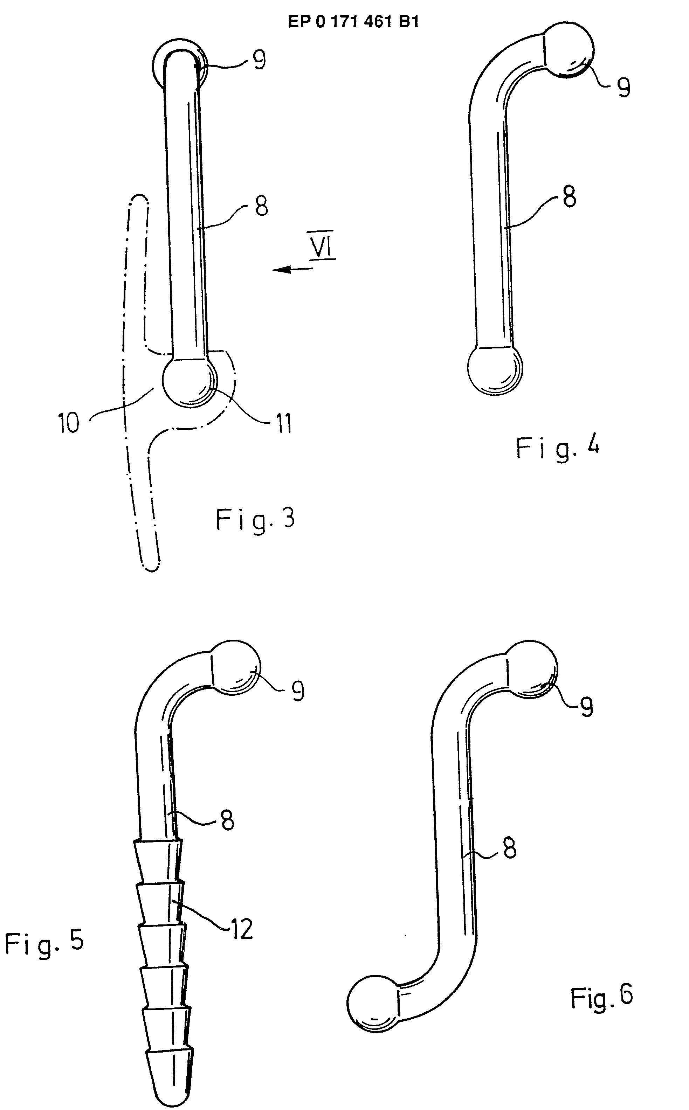

Die Fig. 3 und 4 zeigen eine vorzugsweise aus Kunstoff bestehende Stegstütze 8, die L-Form hat, wobei an dem Ende ihres kürzeren Schenkels eine Kugel 9 angeformt ist, die in die Kugelpfanne 3 der Brücke eingedrückt werden kann. Die Stegstütze kann selbstverständlich auch andere Geometrien aufweisen, die für die jeweilige Brücke geeignet sind.

So kann die Stegstütze S-förmig (Fig. 6) sein und insbesondere bei Brillen Verwendung finden, die für asiatische Nasen geeignet sind.

Bei dem Ausführungsbeispiel gemäß den Fig. 3 und 4 ist ein Seitensteg 10 in Form eines Seitenstegplättchens, das in Fig. 3 strichpunktiert dargestellt ist, ebenfalls mittels eines Kugelgelenks 11 an der Stegstütze 8 angebracht und hat dadurch relativ zu dieser ebenfalls eine dreidimensionale Einstellmöglichkeit, die eine zusätzliche Anpassung an eine individuelle Nasenform ermöglicht. Das untere mit dem Seitensteg verbundene Ende der Stegstütze kann zur Aufnahme des Seitenstegs beliebig andere Verbindungsmöglichkeiten bieten; so kann beispielsweise, wie Fig. 6 zeigt, der längere Schenkel der L-förmigen Stegstütze mit einer quer zu seiner Längsrichtung verlaufenden Riffelung 12 versehen sein, auf die ein Seitensteg aufsteckbar ist, der zu diesem Zweck eine Längsbohrung aufweist. Diese Riffelung kann umlaufend im Querschnitt kreisförmig sein und somit neben der Abstandseinstellung des Seitenstegs zur Kugel 9 in Richtung der Achse dieses Schenkels auch noch eine Drehbewegung um diese Achse zulassen. Bei einer flach ausgebildeten Riffelung fällt jedoch die letztgenannte Einstellmöglichkeit für den Seitensteg weg. Zur Einstellung des Abstands zwischen dem Seitensteg und der Kugel 9 ist es auch möglich, den längeren Schenkel der Seitenstegstütze zweigeteilt als Teleskop auszubilden; bei einer derartigen Gestaltung bleibt der Abstand zwischen dem Seitensteg 10 und der Kugel 9 auch dann einstellbar, wenn der Seitensteg mittels des Kugelgelenks 11 angebracht ist.

In vorteilhafter, allerdings nicht dargestellter Weise können bei den Verbindungseinrichtungen zwischen der Brücke und den Stegstützen, die relativ zueinander eingestellt werden, Rastungen vorgesehen sein; hierdurch ist gewährleistet, daß die einmal eingestellte Lage bis zur endgültigen Fixierung der beiden Bauteile Lage bis zur endgültigen Fixierung der beiden Bauteile sich unbeabsichtigt nicht mehr ändert. Diese Fixierung erfolgt durch Schweißen. Bei Auswahl eines Klebstoffs, der eine gewisse Zeit zur Härtung benötigt, kann dieser zuvor in die Kugelpfanne 3 eingebracht werden, wonach die Kugel 9 eingesetzt und die Stegstütze ausgerichtet wird. Es ist auch möglich, vor dem Einsetzen der Kugel 9 in die Kugelpfanne einen Mikroballoon-Kleber einzubringen, bei dem der Klebstoff in kleinen Kügelchen bzw. einer Kugel gehalten ist, die beim Eindrücken der Kugel 9 zerplatzen und den Klebstoff freigeben. Wird die Kugel 9 ohne vorherige Zugabe von Klebstoff in die Kugelpfanne eingesetzt, kann der Klebstoff beispielsweise durch eine enge Bohrung eingedrückt werden, die in der Brücke ausgebildet ist und in die Kugelpfanne mündet. Darüberhinaus kann ein Klebstoff verwendet werden, der aufgrund der Kapillarität in einen zwischen der Kugel und der Kugelpfanne ausgebildeten Spalt eindringt.

Im Zusammenhang mit den Fig. 3 und 4 ist beschrieben, daß die Stegstützen 8 jeweils einen Seitensteg 10 tragen. Es ist jedoch nicht notwendig, daß jede Stegstütze einen eigenen ihr zugeordneten Seitensteg trägt. Vielmehr können die beiden Stegstützen 8, die an einer Brücke 1 auf beschriebene Weise befestigt sind, auch gemeinsam einen nicht dargestellten Sattelsteg tragen, wobei dann dieser Sattelsteg an zwei Stellen auf gleiche Weise mit den beiden Stegstützen verbunden sein kann, wie dies vorstehend für die Verbindung zwischen einer Stegstütze und einem Seitensteg beschrieben ist.

**Patentansprüche**

1. Brille mit einer Brücke und zwei im wesentlichen stabförmigen Stegstützen, die an ihren oberen Enden fest mit der Brücke verbunden sind und an ihren unteren Enden mit einem Sattelsteg oder je einem Seitensteg verbunden sind, wobei jede der beiden Stegstützen an ihrem oberen Ende eine Kugel aufweist, die in einer Kugelpfanne sitzt und fixiert ist, mit der die Brücke versehen ist, dadurch gekennzeichnet, daß jede Kugelpfanne (3) in der Brücke (1) durch eine zur Rückseite der Brücke offene Ausnehmung in Kunststoffwerkstoff gebildet ist, daß jede Kugel (9) in die zugeordnete Kugelpfanne (3) zunächst beweglich eingeschnappt ist, bevor dieses Kugelgelenk durch Kleben oder Schweißen versteift worden ist, und daß jede Stegstütze (8) an ihrem oberen Ende annähernd im rechten Winkel abgebogen ist.

2. Brille nach Anspruch 1, dadurch gekennzeichnet, daß zwischen jeder Kugelpfanne (3) und der Rückseite der Brücke (1) eine konische Übergangsöffnung (3a) ausgebildet ist, die sich in Richtung zur Kugelpfanne (3) verjüngt.

3. Brille nach Anspruch 1 oder 2, dadurch gekennzeichnet, daß die Stegstützen (8) aus Kunststoff gefertigt sind.

4. Brille nach einem der Ansprüche 1 bis 3, dadurch gekennzeichnet, daß die Kugel (9) und die Kugelpfanne (3) zusammenwirkende Rastelemente aufweisen.

5. Brille nach einem der Ansprüche 1 bis 4, dadurch gekennzeichnet, daß die Stegstütze (8) S-förmig ist.

6. Brille nach einem der Ansprüche 1 bis 5, dadurch gekennzeichnet, daß jede Stegstütze (8) an ihrem unteren Ende mittels eines Kugelgelenks (11) mit dem Seitensteg (10) bzw. Sattelsteg verbunden ist.

7. Brille nach einem der Ansprüche 1 bis 5, dadurch gekennzeichnet, daß jede Stegstütze (8) an ihrem unteren Ende mit einer Riffelung (12) versehen ist, auf die der Seitensteg (10) bzw. Sattelsteg aufsteckbar ist.

**Claims**

1. Spectacles, comprising a bridge and two essentially bar-shaped pad supports which are firmly connected at their upper ends to the bridge and are connected at their lower ends to a saddle pad or one side pad each, each of the two pad supports, at their upper end, having a ball which sits and is fixed in a ball socket with which the bridge is provided, characterized in that each ball socket (3) in the bridge (1) is formed by a recess, open towards the rear side of the bridge, in a plastic material, in that each ball (9) is snapped into the allocated ball socket (3) so as to be movable to begin with before this ball-and-socket joint has been stiffened by adhesive bonding or welding, and in that each pad support (8), at its upper end, is bent approximately at a right angle.

2. Spectacles according to Claim 1, characterized in that there is formed between each ball socket (3) and the rear side of the bridge (1) a conical transition opening (3a) which tapers in the direction of the ball socket (3).

3. Spectacles according to Claim 1 or 2, characterized in that the pad supports (8) are made of plastic.

4. Spectacles according to any of claims 1 to characterized in that the ball (9) and the ball socket (3) have interacting catch elements.

5. Spectacles according to any of claims 1 to 4 characterized in that the pad support (8) is S-shaped.

6. Spectacles according to any of Claims 1 to 5 characterized in that each pad support (8), at its lower end, is connected to the side pad (10) or saddle pad by means of a ball-and-socket joint (11).

7. Spectacles according to any of claims 1 to 5, characterized in that each pad support (8), at its lower end, is provided with ribbing (12) onto which the side pad (10) or saddle pad can be slipped.

**Revendications**

1. Lunette avec un pontet et deux barrettes d'appui sensiblement en forme de barres, qui sont rigidement reliées au pontet à leur extrémité supérieure et qui sont reliées à leur extrémité inférieure à une barrette à scellette ou chacune à une barrette latérale, chacune des deux barrettes d'appui présentant à son extrémité supérieure une rotule reposant et étant fixée dans une cuvette à rotule, caractérisée en ce que chaque cuvette à rotule (3) est formée dans le pontet (1) par un évidement ou vers la face arrière du pontet qui est pratiqué dans la matière plastique, en ce que chaque rotule (9) est encliquetée d'une manière tout d'abord mobile dans une cuvette à rotule (3) associée, avant que cette articulation à rotule soit rigidifiée par collage ou soudage, et en ce que chaque barrette d'appui (8) est reliée à son extrémité supérieure, à peu près à angle droit.

2. Lunette selon la revendication 1, caractérisée en ce qu'entre chaque cuvette à rotule (3) et la face arrière du pontet (1), il est réalisé un orifice de transition conique (3a) rétrécissant en direction de la cuvette à rotule (3) .

3. Lunette selon la revendication 1 ou 2, caractérisée en ce que les barrettes d'appui sont fabriquées en matière plastique.

4. Lunette selon l'une des revendications 1 à 3, caractérisée en ce que la rotule (9) et la cuvette à rotule (3) présentent des éléments à cliquet qui coopèrent.

5. Lunette selon l'une des revendications 1 à 4, caractérisée en ce que la barrette d'appui (8) est en forme de S.

6. Lunette selon l'une des revendications 1 à 5, caractérisée en ce que chaque barrette d'appui (8) est reliée à son extrémité inférieure à la barrette latérale (10) ou à la barrette à scellette, à l'aide d'une articulation à rotule (11) .

7. Lunette selon l'une des revendications 1 à 6 caractérisée en ce que chaque barrette d'appui (8) est pourvue à son extrémité inférieure d'une cannelure (12) sur laquelle la barrette latérale (10) ou la barrette à scellette est enfichable.

Fig. 1

Fig. 1a

Fig. 2

Fig. 2a

9

8

VI

10    11

Fig. 3

9

8

Fig. 4

9

8

12

Fig. 5

9

8

Fig. 6